# EUROPEAN PATENT SPECIFICATION

(11) **EP 1 574 379 B1**
(45) Date of publication and mention of the grant of the patent: **07.05.2008**
(21) Application number: 05005068.1
(22) Date of filing: 08.03.2005
(51) Int. Cl.: B60K 6/00, B60K 7/00

(54) **Straddle-type vehicle**
Zweiradfahrzeug
Véhicule à deux roues

(30) Priority: 08.03.2004 JP 2004063899
(43) Date of publication of application: 14.09.2005
(73) Proprietor: Yamaha Hatsudoki Kabushiki Kaisha, Iwata-shi, Shizuoka-ken (JP)
(72) Inventor: Sasamoto, Shinji, Iwata-shi Shizuoka-ken (JP)
(74) Representative: Grünecker, Kinkeldey, Stockmair & Schwanhäusser Anwaltssozietät

(56) References cited:
- EP-A- 1 270 302
- DE-A1- 10 218 140
- US-A- 6 155 366
- US-A1- 2003 098 188
- PATENT ABSTRACTS OF JAPAN vol. 1996, no. 11, 29 November 1996 (1996-11-29) -& JP 08 175474 A (YAMAHA MOTOR CO LTD), 9 July 1996 (1996-07-09)
- PATENT ABSTRACTS OF JAPAN vol. 2000, no. 04, 31 August 2000 (2000-08-31) -& JP 2000 013913 A (HONDA MOTOR CO LTD), 14 January 2000 (2000-01-14)

## Description

The invention relates to a motorcycle and particularly to a hybrid type motorcycle with a drive wheel driven, as the case may be, by both of an engine and a motor mounted on the vehicle.

Hitherto, in self-running type vehicles, a wheel is generally driven by an engine, as can be seen in motorcycles, automobiles and the like. In recent years, environmental issues have been regarded as important and it is desired that environmental pollutants discharged from an engine-driven vehicle should be decreased to a minimum. Therefore, a vehicle, the so-called a hybrid vehicle, has been suggested in which a drive motor for driving a wheel is mounted together with an engine and the drive wheel is driven by the drive motor.

As for the hybrid vehicle, a parallel hybrid type vehicle is possible in which the drive wheel is driven by at least one of the engine and the motor changed over in response to, for example, running conditions or the amount of residual power of a battery charged by a generator. Also, a series hybrid type vehicle is possible in which a generator is driven by an engine and a drive motor is driven to drive a drive wheel with only electric power generated by the generator.

Of these systems, an example of a drive unit for a parallel hybrid type vehicle (four-wheeled vehicle in particular) is disclosed in JP-A-2003-191761. In the drive unit disclosed therein, an engine, a generator, a power distribution mechanism for distributing drive force of the engine to the generator and drive wheel, and a motor for driving the drive wheel with electric power generated by the generator are disposed on the same axis in series laterally of the vehicle.

US 2003 098188 discloses a hybrid power system for use in a motorcycle comprising a power shaft to be driven by an engine, a drive means (e.g. a wheel) to be driven by rotation of said power shaft, and a generator for generating electricity through rotation of said power shaft, said generator capable of acting as a motor.

It has been desired that such a conventional hybrid type drive unit be mounted on a two-wheeled vehicle. In the two-wheeled vehicle, however, a mounting space for the drive unit is limited to a vehicle body between front and rear wheels and under a seat. Also, the two-wheeled vehicle is narrow in its width compared to an automobile. For reasons described above, it is very difficult for the foregoing drive unit to be mounted on a two-wheeled vehicle, and no two-wheeled vehicle on which the foregoing drive unit is efficiently mounted, has been developed yet.

It is, therefore, an object of the invention to provide a straddle-type vehicle, in particular a motorcycle, with a parallel hybrid type drive unit mounted thereon without significantly protruding in the lateral direction of the vehicle.

For a straddle-type vehicle, this object is solved in an inventive manner by providing a straddle-type vehicle, in particular a motorcycle, comprising a power shaft being disposed perpendicular to a longitudinal direction of the vehicle and being rotatable by an engine, a generator for generating electricity through rotation of the power shaft, and a drive means drivable through rotation of the power shaft, wherein a power distribution means is provided on the power shaft for distributing a drive force of the engine to the generator and to the drive means, and a motor is provided for rotating the drive means with electric power, and wherein further the generator and/or the motor is disposed at a position being different in the longitudinal direction of the vehicle with respect to the power distribution means.

Therefore, an improved motorcycle can be provided with better driving abilities, in particular since the hydraulic system for the suspension units does no longer inhibit the driver in driving the vehicle, and since the layout of other components around the positional placement of the suspension unit is made more easily.

Preferably, the cylinder section of the engine and the generator are disposed, adjacent to each other, in particular at a section forward of the power shaft, in a primary travelling direction of the vehicle.

Further, preferably a trunk space is provided in a space above the cylinder section of the engine, the generator, and/or the power shaft.

Furthermore, preferably the cylinder section of the engine is disposed at a section forwardly of the power shaft in the primary travelling direction of the vehicle, while the generator is provided above the power distribution means and below a seat section of the vehicle.

Still further, preferably the generator is disposed at a position where power is transmitted from the power distribution means through a power transmitting means, in particular an endless transmitting means, such as a belt or a chain provided in a laterally outer side of the vehicle.

Moreover, preferably the motor and the drive means, in particular being a drive wheel, are disposed coaxially, wherein in particular surface clearances of a drive shaft of the drive means of the power shaft and/or a shaft of the generator are approximately the same.

Also, preferably the engine is provided with its cylinder axis disposed approximately horizontally.

According to a preferred embodiment, the straddle-type vehicle further comprises a speed reducer for adjusting drive forces from the engine and the motor to transmit the drive forces to a shaft of the drive means, wherein preferably the speed reducer is provided downstream of the power distribution means in a transmission path of the drive force from the engine to the shaft of the drive means.

According to a further preferred embodiment, the power distribution means comprises a planetary gear type transmission.

According to a still further preferred embodiment, a clutch mechanism is provided in a transmission path of the drive force from the engine to the shaft of the drive means, in particular between a crankshaft of the engine and the power shaft of the power distribution means.

Therefore, a straddle-type vehicle, in particular a motorcycle can be provided with a parallel hybrid type drive unit mounted thereon without significantly protruding in the lateral direction of the vehicle.

In this arrangement, since at least one of the generator and motor is disposed at a different position in the direction of travel of the vehicle to the power distribution means provided on the power shaft, at least one of the generator and motor is not disposed parallel to the power distribution means in the lateral direction. Therefore, neither of the generator and motor are disposed parallel to the power distribution means in the lateral direction, so that the hybrid type drive unit having a generator, an engine, and a motor can be mounted on the vehicle without significantly protruding in the lateral direction of the vehicle.

Since, preferably the cylinder section of the engine and the generator are disposed adjacent to each other at a forward section to the power shaft in the direction of travel of the vehicle to the power shaft, a space in front of the power shaft can be utilized effectively, so that the hybrid type drive unit having a generator, an engine, and a motor can be mounted on the vehicle without significantly protruding in the lateral direction of the vehicle.

Since, further preferably the trunk space is provided in a large space formed above the cylinder section of the engine, the generator and the power shaft, the trunk space becomes larger, improving user's convenience with increased housing capacity.

Besides, since preferably the cylinder section of the engine is disposed at the forward section to the power shaft while the generator is provided above the power distribution means and below a seat section, the engine and the generator can be disposed without being parallel in the lateral direction.

In addition, the space above the power distribution means and below the seat section can be utilized effectively. As a result, a hybrid type drive unit having a generator, an engine and a motor can be mounted on the vehicle without significantly protruding in the lateral direction of the vehicle.

Preferably, the generator is disposed at a position where power is transmitted from the power distribution means through a belt or a chain provided in a laterally outer side of the vehicle. Therefore, it is not necessary to secure a space required, when the belt and the chain are provided in a laterally inner side of the vehicle, for the generator to avoid being a three-dimensional obstacle to other devices mounted on the vehicle, that is, interference with the other devices. As a result, a hybrid type drive unit having a generator, an engine, and a motor can be mounted on the vehicle without significantly protruding in the lateral direction of the vehicle.

Since, preferably the motor, engine, power distribution means, and generator are provided at the same height as that of the axle, the center of gravity of the vehicle can be lowered, improving running performance of the motorcycle.

Moreover, since preferably the engine is disposed approximately horizontally, the center of gravity of the vehicle can be lowered further, improving running performance of the motorcycle.

Besides, since preferably the speed reducer is provided downstream of the power distribution means in a transmission path of the drive force from the engine to the shaft of the drive wheel, torque exerted on the power distribution means can be decreased. As a result, the strength of components of the power distribution means need not be increased more than necessary, so that size reduction of parts can be effected, with more compact power distribution means.

Accordingly, a motorcycle can be provided, on which a device forming a parallel hybrid type drive unit is mounted efficiently without significantly protruding laterally of the vehicle.

As explained, one essential feature of this invention is to dispose a parallel hybrid type drive unit in a scattered relation in the advancing direction of the vehicle, to be mounted on a motorcycle without significantly protruding laterally of the vehicle.

Further preferred embodiments are subject to the subclaims.

In the following, the invention will be described in detail by means of preferred embodiments thereof with reference to the attached drawings, wherein:
- Fig. 1: is a left side view of a scooter type two-wheeled vehicle provided with a parallel hybrid type drive unit according to embodiment 1;
- Fig. 2: is a left side view showing an essential portion of the drive unit of Fig. 1;
- Fig. 3: is a sectional view taken in the direction of arrows along line I-I of Fig. 2 when an essential portion of the drive unit is divided horizontally into two parts;
- Fig. 4(a): is an enlarged view of the power distribution mechanism of Fig. 3;
- Fig. 4(b): is a sectional view taken along line A-A of Fig. 4(a);
- Fig. 4(c): is a sectional view taken along line B-B of Fig. 4(a);
- Fig. 5: are views illustrating an operation of the drive unit;
- Fig. 6: are views illustrating an operation of the drive unit;
- Fig. 7: are views illustrating an operation of the drive unit;
- Fig. 8: are views illustrating an operation of the drive unit;
- Fig. 9: is a left side view of a scooter type two-wheeled vehicle provided with a parallel hybrid type drive unit according to the second embodiment;
- Fig. 10: is a left side view showing an essential portion of the drive unit of Fig. 9; and
- Fig. 11: is a sectional view taken in the direction of arrows along line II-II of Fig. 10 when an essential portion of the drive unit is divided horizontally into two parts.

Embodiments of this invention will be described hereinafter in detail with reference to the drawings.

First, a motorcycle according to a first embodiment will be described with reference to the drawings. Terms "front," "rear," "left," "right," "up" and "down" correspond to the direction as seen by a driver. Also, the motorcycle in this embodiment is described as being a scooter type motorcycle (hereinafter referred to as a "scooter type two-wheeled vehicle") with a hybrid type drive unit.

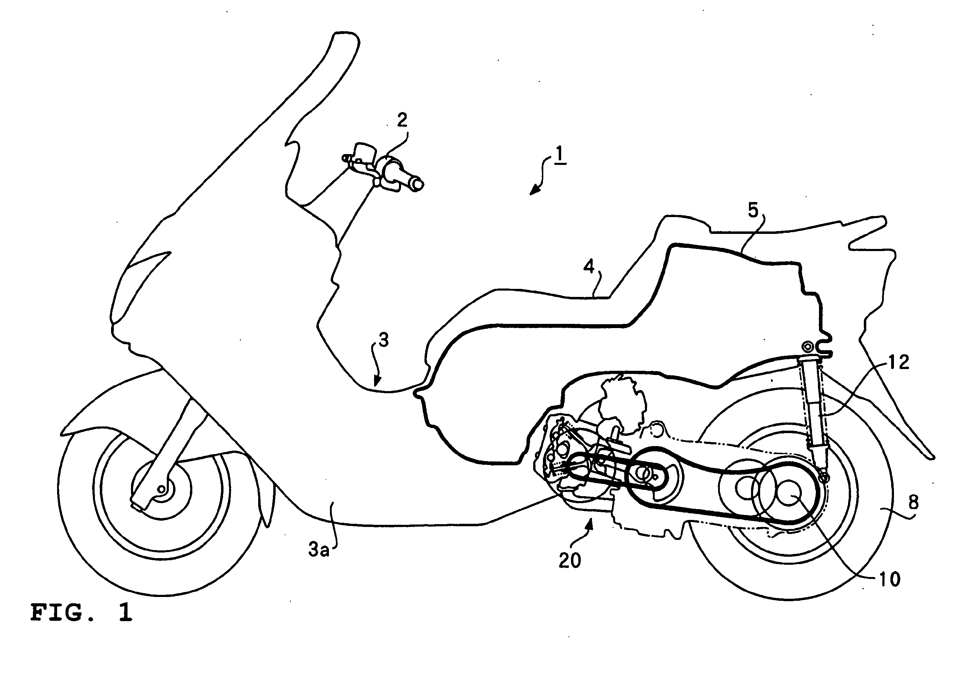

Fig. 1 is a left side view of a scooter type two-wheeled vehicle according to this embodiment.

The scooter type two-wheeled vehicle 1 is of a tandem type, having a vehicle body 3 supporting a handle bar 2 at the front for rotation, at the rear of which is provided a tandem seat 4. The tandem seat 4 is mounted, for opening/closing, to a trunk space 5 disposed below. Downwardly of the trunk space 5 is disposed a drive unit 20.

The drive unit 20 is attached, at the forward end, to the rear end of a forward body 3a extending rearwardly from below the handle bar 2 to a region below the tandem seat 4, for up and down swinging movement through a pivot shaft (not shown).

A rear wheel 8 is mounted to the drive unit 20 at the rear end through an axle 10, and a rear suspension 12 is suspended between the rear end and a frame pivot supporting the rear end of the trunk space 5. Upwardly of and forwardly of the drive unit 20 at the forward end is located a forward end of the trunk space 5.

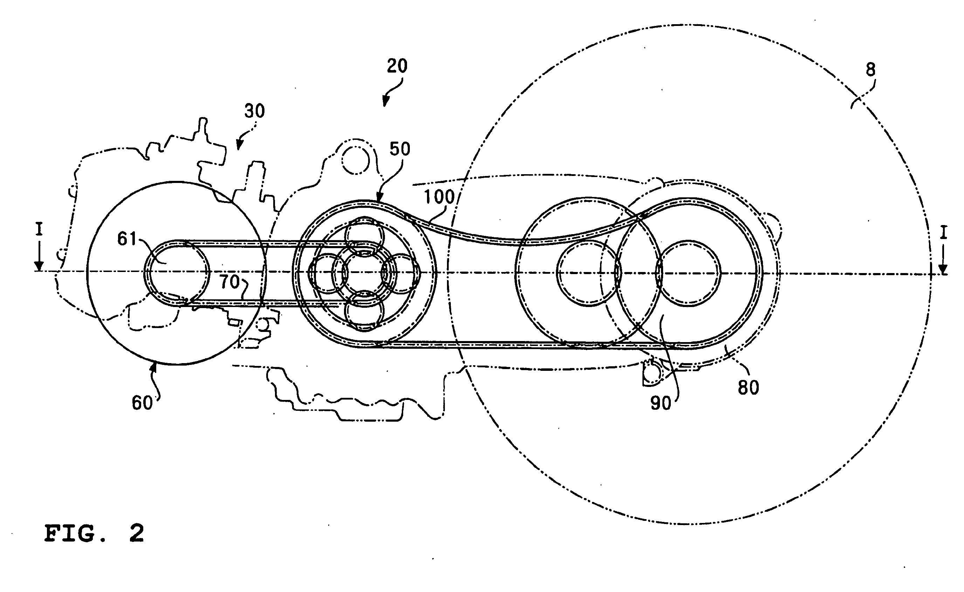

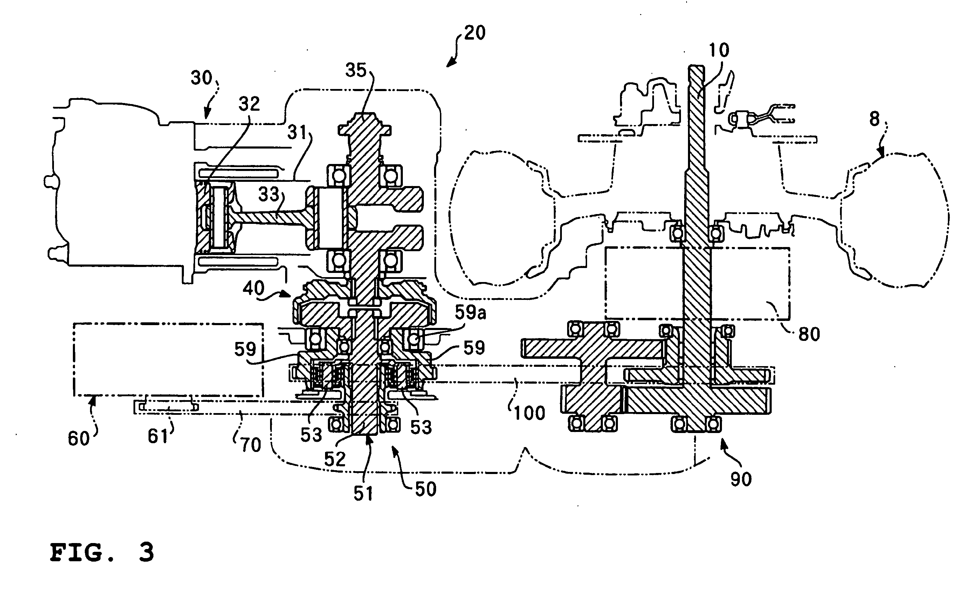

Fig. 2 is a left side view showing an essential portion of the drive unit of Fig. 1, and Fig. 3 is a sectional view taken in the direction of arrows along line I-I of Fig. 2 when the drive unit is divided horizontally into two pieces.

As shown in Fig. 2 and Fig. 3, the drive unit 20 includes an engine 30 and a motor 80 to drive the axle 10, a power distribution mechanism 50, and a generator 60.

The engine 30 is disposed downwardly of the trunk space 5 and approximately in the longitudinal middle of the vehicle, with the axis of the cylinder 31 disposed approximately horizontally and the crankshaft 35 disposed approximately parallel to the lateral direction of the vehicle. The piston 32 in the cylinder 31 is connected to the crankshaft 35 through a connecting rod 33. Thus, the up and down movement of the piston 32 causes the crankshaft 35 to be rotated and the piston can be moved up and down through rotation of the crankshaft 35.

The crankshaft 35 is disposed approximately coaxially with a shaft 52 of a planetary carrier 51 of a power distribution mechanism 50 and connected to the shaft through a clutch mechanism 40. Drive forces of the engine 30 is transmitted to the generator 60 and axle 10 through the power distribution mechanism 50. In the following description, of the drive forces of the engine 30 transmitted through the power distribution mechanism 50, the one transmitted to the generator 60 is referred to as a generating drive force and the one transmitted to the axle 10 as a vehicle drive force.

The generator 60 is disposed adjacent to the cylinder 32 of the engine 30 and forwardly of the power distribution mechanism 50. That is, the generator 60 is provided at the side of the cylinder 32 and in a vacant space in front of the crankshaft 35, and the shaft 52 of the planetary carrier 51 forming a power shaft. Over a rotor shaft 61 of the generator 60 is stretched a chain 70, through which drive force is transmitted from the power distribution mechanism 50. The rotor shaft 61 is formed integrally with a sprocket, over which the chain 70 is stretched.

The generator 60 generates electricity through rotation of the rotor shaft 61 to supply the generated electric power to an unillustrated battery and a motor 80. The generator 60 has the function of a motor driving upon receiving the electric power supply from the battery, in addition to the function of a generator.

For example, when the amount of charge of the battery is smaller than a given value, it acts as a starter motor for starting the engine 30. During deceleration or braking, it acts as a motor for generating resistance force to suppress rotation of the axle 10 in the running direction. The battery stores electric power supplied from the generator 60 and supplies the electric power to the motor 80, and the generator 60 acting also as a motor.

The motor 80 is disposed in close proximity to and at the left side of the rear wheel 8, with its rotary shaft positioned on the same axis of the axle of the rear wheel 8. For example, it may be arranged such that the rotary shaft is formed in a cylindrical shape and the axle 10 is inserted in the rotary shaft for rotation.

On the opposite side of the rear wheel 8 from the motor 80, that is, at the left side of the motor 80 is provided a speed reducer 90, through which drive force of the motor 80 is transmitted to the axle 10. The speed reducer 90 is formed with a sprocket integrally, and a chain 100 is stretched over the sprocket and power distribution mechanism 50.

Through this chain, the vehicle drive force, or a drive force by the engine drive, is transmitted from the power distribution mechanism 50 to the speed reducer 90, causing the axle 10 to be rotated to drive the rear wheel 8.

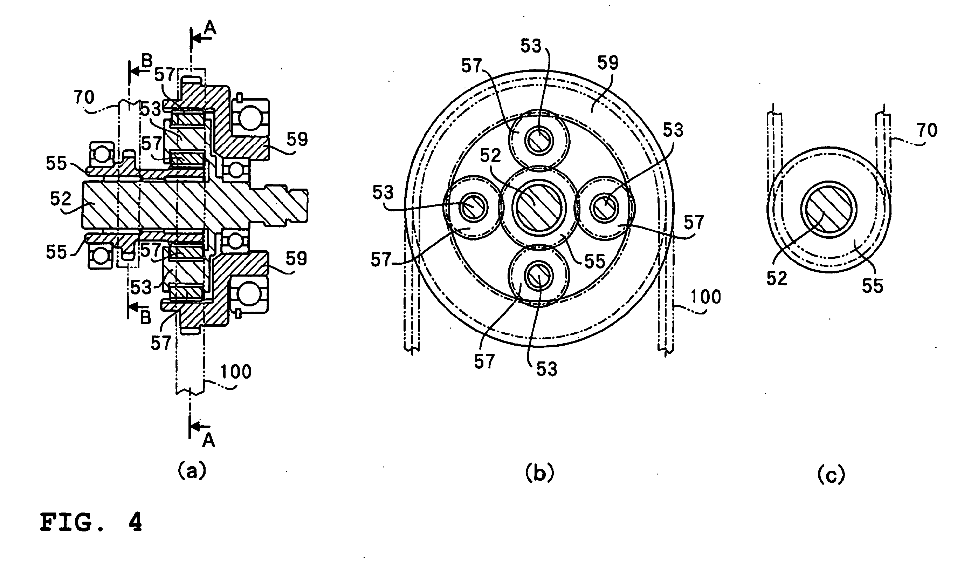

Now, the power distribution mechanism 50 will be described in detail. Fig. 4(a) is an enlarged view of the power distribution mechanism of Fig. 3; Fig. 4(b) is a sectional view taken along line A-A of Fig. 4(a); and Fig. 4(c) is a sectional view taken along line B-B of Fig. 4(a).

The power distribution mechanism 50 is one in which drive force transmitted from the engine 30 is divided properly into a vehicle drive force for directly driving the rear wheel 8 and a generating drive force for power generation by the generator 60.

As shown in Fig. 2 through Fig. 4, the shaft 52 connected to the crankshaft 35 is formed integrally with a flange protruding from the outside circumference. On one side of the flange are provided four planetary pins 53 disposed parallel to and concentrically with the shaft 52.

On these planetary pins 53 are provided planetary gears 57 for rotation. These planetary gears 57 are meshed with a cylindrical sun gear 55 fitted for rotation over the shaft 52 on one side of the flange. That is, these planetary gears 57 rotate on their axes while revolving around the sun gear 55. The sun gear 55 is formed integrally with a sprocket, over which is stretched a chain 70 wound around the rotor shaft 61 of the generator 60.

Around these four planetary gears 57 is disposed a ring gear 59 meshed, in the inside circumference, with each of the four planetary gears 57. Around the ring gear 59 is stretched over a chain 100.

In such a power distribution mechanism 50, when the shaft 52 of the planetary carrier 51 is rotated by the drive force from the crankshaft 35, the four planetary pins 53 integral with the shaft 52 also rotate on their shaft 52. As a result, the planetary gears 57 supported on the planetary pins 53 also revolve around the sun gear 55.

Both of the sun gear 55 and the ring gear 59 mesh and rotate with the planetary gears 57. Therefore, rotation of the sun gear 55 is transmitted as the generating drive force to the generator 60 through the chain 70, for the power generation of the generator 60.

On the other hand, rotation of the ring gear 59 is transmitted as the vehicle drive force to the axle 10 through the chain 100 and speed reducer 90 to drive the rear wheel 8. As for the chain 70 and chain 100, any type of transmission means are satisfactory if only they transmit drive forces from the sun gear 55 and ring gear 59 to the generator 60 and rear wheel 8. For example, a V-belt or a plain belt may be used in place of a chain.

In the scooter type two-wheeled vehicle 1 with the drive unit 20 described above, the rear wheel 8 is driven by at least one of the engine 30 and motor 80 through the power distribution mechanism 50. At this time, operations of the engine 30 and motor 80, that is, the operation of the drive unit 20 is determined according to the running conditions of the scooter type two-wheeled vehicle 1 or the amount of charge of the battery charged with electric power for the driving of the motor 80.

The operation of this drive unit 20 will be described hereinafter for each of the running conditions of the scooter type two-wheeled vehicle 1 or the conditions of the amount of charge of the battery.

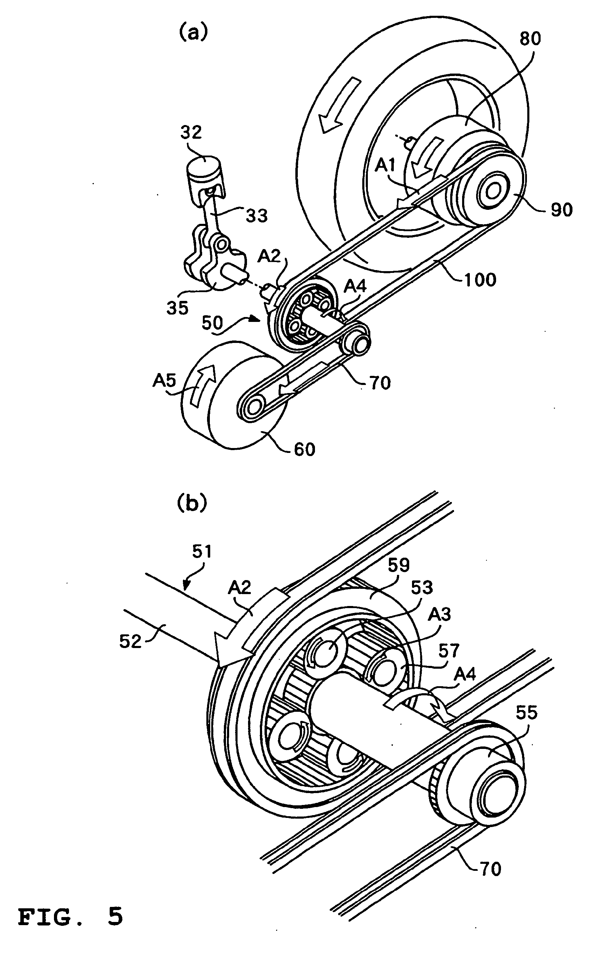

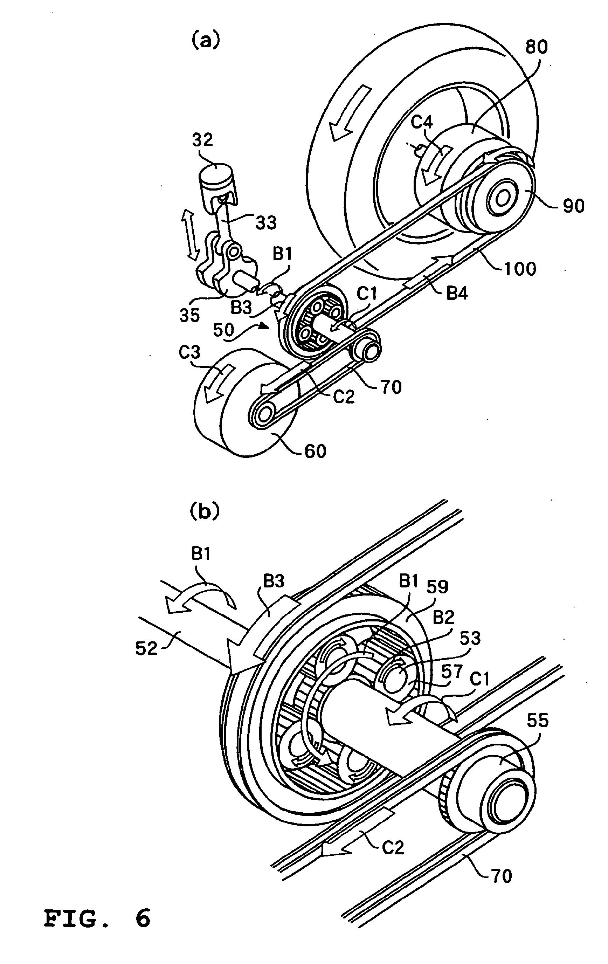

First, the operation of the drive unit 20 when the amount of charge of the battery is a given value or greater, will be described for each of the running conditions of the scooter type two-wheeled vehicle 1 with reference to Fig. 5 and Fig. 6. Fig. 5 and Fig. 6 are views illustrating operations of the drive unit, respectively. In each figure, (a) is a perspective view of the whole drive unit illustrating the sequence of operations of components in the drive unit, and (b) is an enlarged view of the power distribution mechanism shown in (a). Directions of the operations of the components in the drive unit 20 in each figure are designated by arrows A-C.

At starting and during light load running, the scooter type two-wheeled vehicle 1 starts and runs only by the drive force of the motor 80. Since the amount of charge of the battery is a given value or greater, there is no need of power generation by the generator 60. Therefore, the engine 30 is stopped.

As for the operation of the drive unit 20 at this time, as shown in Fig. 5(a) and Fig. 5(b), first, the motor 80 is driven. The rotation of the motor 80 causes the axle 10 to be rotated through the speed reducer 90, and the chain 100 is also rotated in relation to the motor (in the direction of A1). Rotation of the axle 10 causes the rear wheel 8 to be rotated.

The rotation of the chain 100 (in the direction of A1) causes the ring gear 59 to be rotated (in the direction of A2). When the ring gear 59 rotates (in the direction of A2), the planetary gears 57 are rotated (in the direction of A3) in the same direction to the rotation. In association with the rotation of the planetary gears 57 (in the direction of A3), the sun gear 55 is rotated in the opposite direction (in the direction of A4) to the planetary gears 57.

The rotation of the sun gear 55 (in the direction of A4) causes the rotor shaft 61 of the generator 60 to be rotated through the chain 70 (in the direction of A5). At this time, the sun gear 55 is rotated at a rotational speed in agreement with the number of related rotations of the chain 100 (rotations of the ring gear 59). This is because cranking of the engine (the condition in which revolution is given to the crankshaft from the outside to reciprocate the piston 32) is prevented by the related rotation of the chain 100 associated with the rotation of the motor 80.

Specifically, when the motor 80 rotates, that is, the ring gear 59 rotates (in the direction of A2), the planetary gears 57 rotate on their axes while the planetary pins 53 revolve around the sun gear 55. This revolution (corresponding to the rotation of the planetary carrier 51) is transmitted to the crankshaft 35 through the shaft 52, causing the piston 32 to be driven through the connecting rod 33.

To prevent the foregoing piston movement, the rotor shaft 61 of the generator 60 is rotated in synchronization with the rotation of the motor 80. This rotation causes the sun gear 55 to be rotated in synchronization with the rotation of the ring gear 59 through the chain 70. Therefore, since the sun gear 55 and ring gear 59 rotate in synchronization with each other, the planetary carrier 51 itself does not rotate. Thus, the shaft 52 does not rotate and its rotational force is not transmitted to the crankshaft, preventing the cranking of the engine.

During steady running, the scooter type two-wheeled vehicle 1 runs on both the power of the engine 30 and the power of the motor 80, for the running of the vehicle within the operating range in which a higher fuel consumption ratio of the engine is effected. Specifically, the power of the engine 30 is divided by the power distribution mechanism 50 properly into a vehicle drive force to directly drive the rear wheel 8 and a generating drive force to drive the generator 60 for the power generation. That is, the drive unit 20 outputs the vehicle drive force, and the power of the motor 80 produced by the electric power generated through the generator 60 by the generating drive force.

As for the operation of the drive unit 20, as shown in Fig. 6(a) and Fig. 6(b), the drive by the engine 30 causes the planetary carrier 51 to be rotated (in the direction of B1). That is, the rotation of the crankshaft 35 of the engine 30 causes the shaft 52 to be rotated (in the direction of B1), and the planetary pins 53 also revolve around the shaft 52 (in the direction of B1). In association with the revolution of the planetary pins 53 (in the direction of B1), the planetary gears 57 rotate on the planetary pins 53 (in the direction of B2) while revolving around the shaft 52 (in the direction of B1).

In association with the rotation of the planetary gears 57 (in the direction of B2), the ring gear 59 is rotated (in the direction of B3), and in association with the rotation of the ring gear 59 (in the direction of B3), the chain 100 is rotated (in the direction of B4). The rotation of the chain 100 is transmitted to the axle 10 through the speed reducer 90, to rotate the rear wheel 8.

On the other hand, the rotation of the planetary gears 57 (in the direction of B2) causes the sun gear 55 meshed with the planetary gears 57 to be also rotated in the opposite direction to the planetary gears 57 (in the direction of C1). In association with the rotation of the sun gear 55 (in the direction of C1), the chain 70 is rotated (in the direction of C2), to rotate the rotor shaft 61 (in the direction of C3). The rotation of the rotor shaft 61 causes the generator 60 to generate electricity. The power generating force by the generator 60 is supplied to the motor 80 as electric power to drive the motor, and the motor 80 is rotated (in the direction of C4), to thereby rotate the rear wheel 8.

During running when a higher output is required, such as acceleration and climbing, in addition to the operation of the foregoing "during steady running", the scooter type two-wheeled vehicle 1 raises the engine speed while the electric power stored in the battery is also supplied to the motor 80 together with the generated electric power, outputting a larger drive force. That is, the drive force by the motor 80 is transmitted to the axle 10 in addition to the drive force by the engine 30, to thereby rotate the rear wheel 8.

During deceleration and braking, in the scooter type two-wheeled vehicle 1, the engine 30 applies engine braking. That is, rotation of the axle 10 of the rear wheel 8 is transmitted to the engine 30 through the speed reducer 90, chain 100 and power distribution mechanism 50, to move the piston 32 of the engine 30 up and down, at which time, frictional force and compression resistance force associated with the up and down movement of the piston 32, or the so-called engine braking, is applied.

Specifically, in the generator 60, rotation of the rotor shaft 61 is raised temporarily within a range in which over speed of the engine 30 and rotor shaft 61 is avoided, to raise the speed of the engine 30 through the chain 70 and power distribution mechanism 50. Engine braking is applied by the engine 30 at the elevated engine speed, whereby the scooter type two-wheeled vehicle 1 is decelerated and braked.

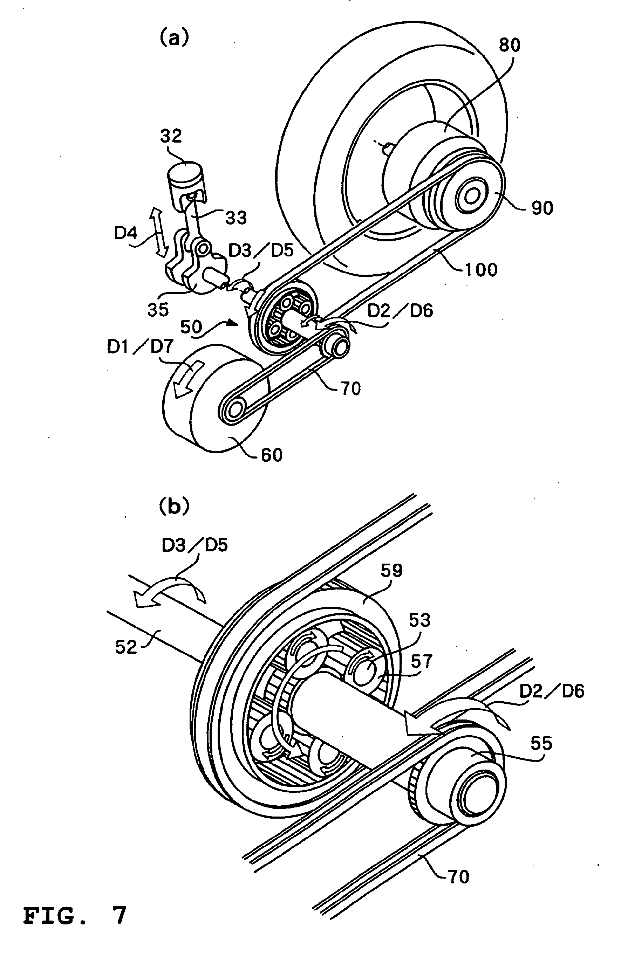

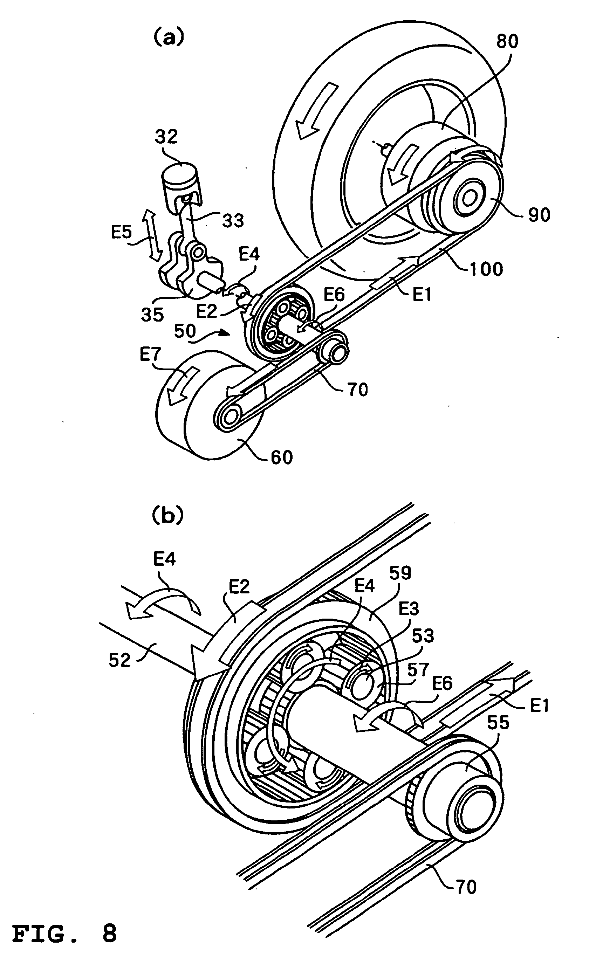

Now, the operation of the drive unit 20 when the amount of charge of the battery is a given value or smaller, will be described for each of the running conditions of the scooter type two-wheeled vehicle 1 with reference to Fig. 7 and Fig. 8. Fig. 7 and Fig. 8 are views illustrating operations of the drive unit, respectively. In each drawing, (a) is a perspective view of the whole drive unit illustrating the sequence of operations of components in the drive unit, and (b) is an enlarged view of the power distribution mechanism shown in (a). Directions of the operations of the components in the drive unit 20 in each figure are designated by arrows D and E.

In the following, operation during idling is described: First, the generator 60 is energized with electric power stored in an unillustrated battery, to act as a motor, and start the engine with the rotational force. During idling after the operation of the engine 30, the engine 30 drives the generator 60 through the power distribution mechanism 50, and electric power generated by the operation of the generator 60 is charged in the battery or supplied to the motor 80.

As for the operation of the drive unit 20 at this time, as shown in Fig. 7(a) and Fig. 7(b), first, the generator 60 is energized and rotated (in the direction of D1), to act as a starter motor. The rotation of the generator 60 is transmitted to the sun gear 55 through the chain 70, to rotate the sun gear 55 (in the direction of D2). At this time, since the engine is in an idling condition, the scooter type two-wheeled vehicle 1 is stopped and the ring gear 59 is stopped.

Therefore, when the sun gear 55 rotates (in the direction of D2), the planetary gears 57 meshing with the sun gear 55 rotate on their axes while revolving around the sun gear 55. In association of this movement, the planetary carrier 51 rotates (in the direction of D3) on the shaft 52 through the planetary pins 53 supporting the planetary gears 57. The rotation of the shaft 52 of the planetary carrier 51 is transmitted to the crankshaft 35 through the clutch mechanism 40, to start the engine 30 (in the direction of D4).

Thereafter, when the engine 30 is started, since the ring gear 59 is stopped, the planetary carrier 51 and planetary gears 57 are rotated (in the direction of D5).

The rotation of the planetary gears 57 is transmitted to the sun ear 55, and the sun gear 55 rotates in the opposite direction to the planetary gears 57 (in the direction of D6). The rotation of the sun gear 55 is transmitted to the rotor shaft 61 through the chain 70, to rotate the rotor shaft 61 (in the direction of D7).

The rotation of the rotor shaft 61 causes the generator 60 to generate electricity, and the generated electric power is stored in a battery. The motor 80 is supplied with electric power from the battery or generator 60 and transmits drive force to the speed reducer 90 not to rotate the axle 10.

At starting and during light load running, the battery is charged with generated electric power of the generator 60 by the power of the engine 30 while starting and running is performed by the drive force of the motor 80.

As for the operation of the drive unit 20 at this time, as shown in Fig. 8(a) and Fig. 8(b), first, the motor 80 is driven to cause the axle 10 to be rotated through the speed reducer 90, and the scooter type two-wheeled vehicle 1 to be started. At this time, in association with the rotation of the axle 10, the chain 100 is rotated in relation to the axle 10 (in the direction of E1), to rotate the ring gear 59 (in the direction of E2).

The rotation of the ring gear 59 (in the direction of E2) causes the planetary gears 57 to be rotated (in the direction of E3), and this rotation causes the planetary carrier 51 to be rotated (in the direction of E4). At this time, since the engine 30 has been operating continuously (in the direction of E5) from the time of the foregoing "during idling", the planetary carrier 51 is also rotated by this drive force.

The rotation of the planetary carrier 51 (in the direction of E4) causes the sun gear 55 to be rotated. The rotation of the sun gear 55 (in the direction of E6) is transmitted through the chain 60, to rotate the rotor shaft 61 (in the direction of E7). Since the amount of charge of the battery is a given value or smaller, the rotation of the rotor shaft 61 causes the generator 60 to generate electricity for the charging of the battery.

During steady running, even when the amount of charge of the battery is smaller than a given value, the scooter type two-wheeled vehicle 1 operates basically in the same manner as when the amount of charge of the battery is a given value or greater. However, before the amount of charge of the battery becomes a given value or greater, electric power obtained from the generator 60 is utilized in charging the battery, in addition to driving the motor 80.

During running when a higher output is required, such as acceleration and climbing, in addition to the operation of the drive unit 20 in the foregoing "during steady running", engine speed is raised while electric power stored in the battery is also supplied to the motor 80 together with the generated electric power, to output a larger drive force. However, no electric power of the battery is supplied to the motor 80 before the amount of charge of the battery becomes a given value or greater, and the drive force of the motor 80 by the largest electric power which can be supplied from the generator 60 at that time is outputted, as well as the vehicle drive force from the engine 30.

During deceleration and braking, in the scooter type two-wheeled vehicle 1, the rotation of the axle 10 is transmitted to the motor 80 through the speed reducer 90, causing the motor 80 to be rotated, and the motor 80 to act as a generator to regenerate electricity. As a result, kinetic energy during deceleration and braking of the vehicle is converted into electric energy and collected in the battery. That is, the scooter type two-wheeled vehicle 1 is decelerated and braked by the decelerating and braking function of the regenerative braking in the motor 80.

At this time, since the decelerating and braking function of the regenerative braking in the motor 80 is effective, engine braking of the engine 30 acts as a minimum essential of deceleration. Therefore, the rotor shaft 61 of the generator 60 is controlled within a range in which over speed of the engine 30 and rotor shaft 61 is prevented.

As described above, the scooter type two-wheeled vehicle 1 changes its running mode in response to the running conditions and the amount of charge of the battery.

In this embodiment, although the drive unit 20 has been described as being applied to a scooter type two-wheeled vehicle, this invention is not limited to that, but may be applied to any two-wheeled vehicle if only the two-wheeled vehicle has a drive unit arranged and disposed in the same manner as the drive unit 20.

It is to be understood that the term two-wheeled vehicle used in this description includes any type of straddle-type vehicle, irrespective of the actual number of wheels. In particular, straddle-type vehicles such as 3- or 4-wheeled beach buggies or fun-vehicles, and/or snow vehicles being chain-driven, or intermediate type vehicles having chains and wheels are to be summarized under the term "two-wheeled vehicle" since, because of the straddle-type layout, the like space situation aspects are to be conquered.

As described above, each of the generator 60 and motor 80 is disposed at a different position offset longitudinally of the scooter type two-wheeled vehicle 1 from the position on the power shafts including the crankshaft 35 of the engine 30, and the shaft 52 of the planetary carrier 51. Therefore, since the generator 60 and motor 80 are not disposed parallel to each other laterally, the drive unit 20 can be mounted on the scooter type two-wheeled vehicle 1 without significantly protruding laterally of the vehicle. This effect can be produced when at least either one of the generator 60 and motor 80 is disposed offset longitudinally from the power shafts.

In addition, since the generator 60 is disposed in a vacant space in front of the power distribution mechanism 50, the space of the scooter type two-wheeled vehicle 1 in the lateral direction can be utilized effectively and the drive unit 20 can be mounted on the scooter type two-wheeled vehicle 1 without significantly protruding laterally of the vehicle.

Further, as shown in Fig. 1, the rotor shaft 61 of the generator 60, the shaft 52 of the planetary carrier 51 in the power distribution mechanism 50 and the center of the motor 80 are disposed approximately at the same height as the axle 10 of the rear wheel 8 and parallel longitudinally of the scooter type two-wheeled vehicle 1.

That is, the drive unit 20 of a large weight is disposed near the portion of a minimum road clearance in the body of the scooter type two-wheeled vehicle 1. Therefore, the center of gravity of the vehicle can be lowered, improving running performance of the scooter type two-wheeled vehicle 1.

Furthermore, since the drive unit 20 is disposed near the portion of a minimum road clearance in the body of the scooter type two-wheeled vehicle 1, and in a large space produced above is provided the trunk space 5, a larger trunk space is effected, improving user's convenience with a larger housing capacity.

Moreover, since the power distribution mechanism 50 is provided upstream of the speed reducer 90 in the transmission path of the drive force from the engine 30 to the axle 10, torque exerted on the power distribution mechanism 50 can be decreased. Therefore, since there is no need of the strength of components of the power distribution mechanism 50 being increased more than necessary, parts can be decreased in size, effecting a more compact arrangement of the power distribution mechanism 50. Thus, a more compact drive unit 20 can also be effected.

Components forming the power distribution mechanism 50 may be dispose laterally opposite on the axis of the shaft 52 to the arrangement shown in Fig. 3. That is, at the side (left side) of the engine 30 shown in Fig. 3, the chain 70 for transmitting power to the generator 60 and the chain 100 stretched over the ring gear 59 are disposed in this order adjacent to the clutch mechanism 40.

In this case, bearings, such as bearing 59a of the ring gear 59 and the like, for supporting components rotating on the shaft 52 are required. Therefore, the chain 70 is located laterally on the power shaft at a position adjacent to that of the bearing 59a shown in Fig. 3. This is because a bearing for supporting the clutch mechanism 40 is disposed at the position of the bearing 59a. Further, a bearing for the ring gear 59 is disposed adjacent to the chain 70. The length of the power distribution mechanism 50 becomes larger in the lateral direction than that shown in Fig. 3 by as much as the areas where the bearings of the clutch mechanism and ring gear are disposed, respectively.

Further, if the sprocket of the generator 60 is disposed forwardly of the sprocket over which the chain 70 arranged as described above is stretched, the generator 60 is disposed, with its upper surface, on which the sprocket is provided, facing the side of the cylinder 31 of the engine 30. This is because for the influence of heat radiation of the engine 30 to be held in check to a minimum, the generator 60 should be spaced a given distance from the side of the cylinder 31, and if the given distance is maintained, it is impossible for the generator to be disposed, with its bottom surface facing the side of the cylinder 31.

In this arrangement, the lateral position of the bottom of the generator 60 is away from the engine 30 further than that of the sprocket of the generator 60 shown in Fig. 3. As a result, the axial length of the power distribution mechanism 50 itself, that is, the width of the scooter type two-wheeled vehicle 1 on which the drive unit 20 is mounted, is increased.

Therefore, since the power distribution mechanism 50 has an arrangement as shown in Fig. 3 and the generator 60 is disposed forwardly of the power distribution mechanism 50, the width of the drive unit 20 can be decreased.

In addition, since the speed reducer 90 is disposed, for a reason related to its external appearance, such that its center is offset from the axle 10, it should be spaced from the rear wheel 8 to avoid being a three dimensional obstacle to the rear wheel 8, that is, the interference with the rear wheel 8, producing a space between the rear wheel 8 and speed reducer 90. Although the position of the motor 80 is not limited specifically, the space on the rear wheel side can be utilized efficiently if the motor 80 is provided in this space.

Further, since the rotor shaft 61 of the generator 60, planetary carrier 51, axle 10 and rotor shaft of the motor 80 are disposed approximately parallel to each other, a higher transmission efficiency of the drive force can be secured.

Although the crankshaft 35 and planetary gears 51 can be disposed offset from each other of their coaxial arrangement, they are preferably provided approximately on the same axis, taking account of the transmission efficiency of the drive force. If the crankshaft 35 and planetary gears 51 are provided approximately on the same axis, a wider space is produced in front of the power distribution mechanism 50 and at the side of the cylinder of the engine 30. Since the generator 60 is disposed in this wide space, the space in front of the power distribution mechanism 50 can be utilized effectively and the drive unit 20 can be mounted on the scooter type two-wheeled vehicle 1 without significantly protruding laterally of the vehicle.

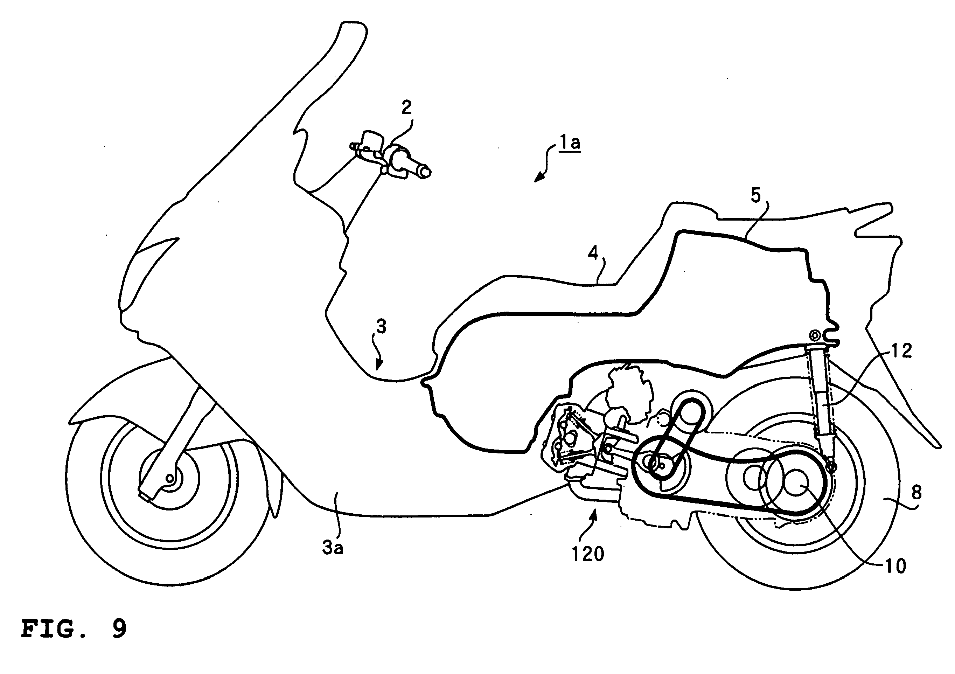

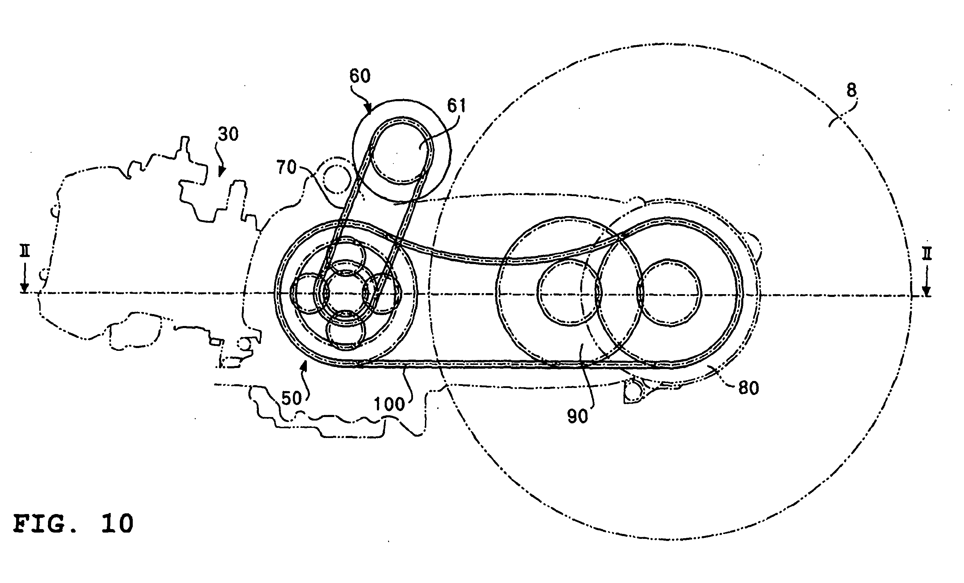

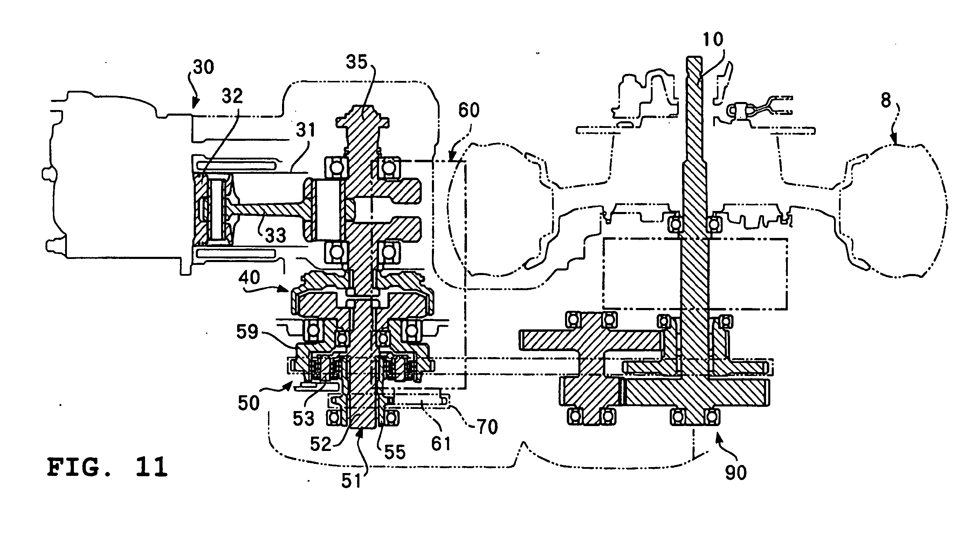

Fig. 9 is a left side view of a scooter type two-wheeled vehicle provided with a parallel hybrid type drive unit according to a second embodiment. Fig. 10 is a left side view showing an essential portion of the drive unit of Fig. 9. Fig. 11 is a sectional view taken along line II-II of Fig. 10 when an essential portion of the drive unit is divided horizontally into two parts.

The scooter type two-wheeled vehicle according to embodiment 2 is different from the scooter type two-wheeled vehicle 1 of embodiment 1 only in the position of the generator 60 disposed in the drive unit, and the construction and arrangement other than that are the same as in the foregoing embodiment. Therefore, in the following description, the description on the same construction is omitted and only different points will be described.

A scooter type two-wheeled vehicle 1 a shown in Fig. 9 basically has the same construction as the scooter type two-wheeled vehicle 1, including a vehicle body 3 supporting a handle bar 2 at the front for rotation, a tandem seat 4 at the rear of the vehicle body, a trunk space 5 below the tandem seat and a drive unit 120 under the trunk space. In this drive unit 120, the generator 60 is disposed above the engine 30 and power distribution mechanism 50 and below the tandem seat 4. The generator 60 is disposed, with its longitudinal direction approximately in agreement with the lateral direction of the vehicle.

This arrangement is effective especially when no sufficient space is provided in the area where the generator 60 is disposed in the drive unit 20 of embodiment 1 (for example, such as when the engine 30 is of a multiple cylinder type with a large width).

As a result of the foregoing arrangement, even if the width of the engine 30 becomes larger, lateral protrusion is decreased to a minimum and the hybrid type drive unit 120 can be mounted on the scooter type two-wheeled vehicle 1.

If the number of cylinders of the engine 30 becomes larger and engine output is increased, the output of the motor 80 and the amount of power generation of the generator 60 should also be increased accordingly. If the amount of power generation is increased, the diameter of the generator at the end face becomes larger or the generator becomes longer in the longitudinal direction.

Therefore, a generator 60 whose diameter is decreased to a minimum and which is increased in length, is disposed in a area where there is a relatively long space in the lateral direction. As a result, while the amount of power generation of the generator 60 is secured and lateral protrusion is decreased to a minimum, the hybrid type drive unit 120 can be mounted on the scooter type two-wheeled vehicle 1.

Although in this embodiment, the drive unit has been described as being applied to a scooter type two-wheeled vehicle, the invention is not limited to that, but may be applied to any straddle-type vehicle, in particular to any type of two-wheeled vehicle, if only the vehicle runs through a generator driven by an engine, and a motor driven by the generator.

The invention is useful for a vehicle, in particular a motorcycle, provided with a device forming a parallel hybrid type drive unit without significantly protruding laterally of the vehicle.

## Claims

1. Straddle-type vehicle, in particular a motorcycle, comprising:
a power shaft (52) being disposed perpendicular to a longitudinal direction of the vehicle and being rotatable by an engine (30);
a generator (60) for generating electricity through rotation of the power shaft (52); and
a drive means (8) drivable through rotation of the power shaft (52); wherein
a power distribution means (50) is provided on the power shaft (52) for distributing a drive force of the engine (30) to the generator (60) and to the drive means (8); and
a motor (80) is provided for rotating the drive means (8) with electric power, and wherein further the generator (60) and/or the motor (80) is disposed at a position being different in the longitudinal direction of the vehicle with respect to the power distribution means (50).

2. Straddle-type vehicle according to claim 1, **characterized in that** the cylinder section (31) of the engine (30) and the generator (60) are disposed, adjacent to each other, in particular at a section forward of the power shaft (52), in a primary travelling direction of the vehicle.

3. Straddle-type vehicle according to claim 1 or 2, **characterized in that** a trunk space (5) is provided in a space above the cylinder section (31) of the engine (30), the generator (60), and/or the power shaft (50).

4. Straddle-type vehicle according to at least one of the claims 1 to 3, **characterized in that** the cylinder section (31) of the engine (30) is disposed at a section forwardly of the power shaft (52) in the primary travelling direction of the vehicle, while the generator (60) is provided above the power distribution means (50) and below a seat section (4) of the vehicle.

5. Straddle-type vehicle according to at least one the claims 1 to 4, **characterized in that** the generator (60) is disposed at a position where power is transmitted from the power distribution means (50) through a power transmitting means, in particular an endless transmitting means, such as a belt or a chain (40) provided in a laterally outer side of the vehicle.

6. Straddle-type vehicle according to at least one of the claims 1 to 5, **characterized in that** the motor (80) and the drive means (8), in particular being a drive wheel, are disposed coaxially, wherein in particular surface clearances of a drive shaft (10) of the drive means (8) of the power shaft (52) and/or a shaft (61) of the generator (60) are approximately the same.

7. Straddle-type vehicle according to at least one of the claims 1 to 6, **characterized in that** the engine (30) is provided with its cylinder axis disposed approximately horizontally.

8. Straddle-type vehicle according to at least one of the claims 1 to 7, **characterized by** further comprising:
a speed reducer (90) for adjusting drive forces from the engine (30) and the motor (80) to transmit the drive forces to a shaft (10) of the drive means (8),
wherein preferably the speed reducer (90) is provided downstream of the power distribution means (50) in a transmission path of the drive force from the engine (30) to the shaft (10) of the drive means (8).

9. Straddle-type vehicle according to at least one of the claims 1 to 8, **characterized in that** the power distribution means (50) comprises a planetary gear type transmission.

10. Straddle-type vehicle according to at least one of the claims 1 to 9, **characterized in that** a clutch mechanism (40) is provided in a transmission path of the drive force from the engine (30) to the shaft (10) of the drive means (8), in particular between a crankshaft (35) of the engine and the power shaft (52) of the power distribution means (50).

## Patentansprüche

1. Fahrzeug vom Aufsitz- Typ, insbesondere ein Motorrad, aufweisend:
eine Leistungswelle (52), die zu einer Längsrichtung des Fahrzeuges rechtwinklig angeordnet und durch einen Motor (30) drehbar ist;
einen Generator (60) zum Erzeugen von Elektrizität durch Drehung der Leistungswelle (52); und
eine Antriebseinrichtung (8), antreibbar durch Drehung der Leistungswelle (52); wobei
eine Leistungsverteilungseinrichtung (50) auf der Leistungswelle (52) zum Verteilen der Antriebskraft des Motors (30) zu dem Generator (60) und zu der Antriebseinrichtung (8) vorgesehen ist; und
wobei ein Motor (80) zum Drehen der Antriebsvorrichtung (8) mit elektrischer Leistung versehen wird, und wobei außerdem der Generator (60) und / oder der Motor (80) an einer Position angeordnet ist, die in der Längsrichtung des Fahrzeuges zu der Leistungsverteilungseinrichtung (50) verschieden ist.

2. Fahrzeug vom Aufsitz- Typ nach Anspruch 1, **dadurch gekennzeichnet, dass** der Zylinderabschnitt (31) des Motors (30) und der Generator (60) zueinander benachbart angeordnet sind, insbesondere an einem Abschnitt vor der Leistungswelle (52) in einer primären Fahrtrichtung des Fahrzeuges.

3. Fahrzeug vom Aufsitz- Typ nach Anspruch 1 oder 2, **dadurch gekennzeichnet, dass** ein Kofferraum (5) oberhalb des Zylinderabschnittes (31) des Motors (30), des Generators (60) und / oder der Leistungswelle (50) vorgesehen ist.

4. Fahrzeug vom Aufsitz- Typ nach zumindest einem der Ansprüche 1 bis 3, **dadurch gekennzeichnet, dass** der Zylinderabschnitt (31) des Motors (30) an einem Abschnitt vor der Leistungswelle (52) in der primären Fahrrichtung des Fahrzeuges vorgesehen ist, während der Generator (60) oberhalb der Leistungsverteilungseinrichtung (50) und unterhalb eines Sitzabschnittes (4) des Fahrzeuges vorgesehen ist.

5. Fahrzeug vom Aufsitz- Typ nach zumindest einem der Ansprüche 1 bis 4, **dadurch gekennzeichnet, dass** der Generator (60) an einer Position angeordnet ist, wo Leistung von der Leistungsverteilungseinrichtung (50) durch eine Leistungsübertragungseinrichtung, insbesondere eine endlose Übertragungseinrichtung, wie z. B. einen Riemen oder eine Kette (40), vorgesehen in einer seitlichen Außenseite des Fahrzeuges, übertragen wird.

6. Fahrzeug vom Aufsitz- Typ nach zumindest einem der Ansprüche 1 bis 5, **dadurch gekennzeichnet, dass** der Motor (80) und die Antriebseinrichtung (8), die insbesondere ein Antriebsrad ist, koaxial angeordnet sind, wobei insbesondere die Oberflächenabstände einer Antriebswelle (10) der Antriebseinrichtung (8) der Leistungswelle (52) und / oder einer Welle (61) des Generators (60) annähernd dieselben sind.

7. Fahrzeug vom Aufsitz- Typ nach zumindest einem der Ansprüche 1 bis 6, **dadurch gekennzeichnet, dass** der Motor (30) mit seiner Zylinderachse annähernd horizontal angeordnet ist.

8. Fahrzeug vom Aufsitz- Typ nach zumindest einem der Ansprüche 1 bis 7, **gekennzeichnet durch** außerdem aufweisend:
eine Drehzahlreduzierungseinrichtung (90) zum Einstellen der Antriebskräfte von dem Motor (30) und dem Motor (80), um die Antriebskräfte auf eine Welle (10) der Antriebseinrichtung (8) zu übertragen, wobei vorzugsweise die Drehzahlreduzierungseinrichtung stromab der Leistungsverteilungseinrichtung in einem Getriebepfad der Antriebskräfte von dem Motor (30) in der Welle (10) der Antriebseinrichtung angeordnet ist.

9. Fahrzeug vom Aufsitz- Typ nach zumindest einem der Ansprüche 1 bis 8, **dadurch gekennzeichnet, dass** die Leistungsverteilungseinrichtung (50) ein Getriebe vom Planetenrad- Typ aufweist.

10. Fahrzeug vom Aufsitz- Typ nach zumindest einem der Ansprüche 1 bis 9, **dadurch gekennzeichnet, dass** eine Kupplungsvorrichtung (40) in einem Getriebepfad der Antriebskraft von dem Motor (30) zu der Welle (10) der Antriebseinrichtung (8), insbesondere zwischen einer Kurbelwelle (35) des Motors und der Leistungswelle (52) der Leistungsverteilungseinrichtung (50), vorgesehen ist.

## Revendications

1. Véhicule du type à enfourcher, notamment motocyclette, comprenant :
un arbre de transmission de puissance (52), qui est disposé perpendiculairement à un sens longitudinal du véhicule et qui peut être entraîné en rotation par un moteur (30) ;
une génératrice (60) pour produire de l'électricité par l'intermédiaire de la rotation de l'arbre de transmission de puissance (52) ; et
des moyens d'entraînement (8), qui peuvent être entraînés par l'intermédiaire de la rotation de l'arbre de transmission de puissance (52) ; dans lequel
des moyens de distribution de puissance (50) sont prévus sur l'arbre de transmission de puissance (52) afin de distribuer une force d'entraînement du moteur (30) à la génératrice (60) et aux moyens d'entraînement (8) ; et
un moteur électrique (80), qui est prévu pour faire tourner les moyens d'entraînement (8) par de l'énergie électrique, et dans lequel, en outre, la génératrice (60) et/ou le moteur électrique (80) est ou sont disposé(s) en une position différente dans le sens longitudinal du véhicule, par rapport aux moyens de distribution de puissance (50).

2. Véhicule du type à enfourcher selon la revendication 1, **caractérisé en ce que** la partie cylindre (31) du moteur (30) et la génératrice (60) sont disposées, de manière adjacente entre elles, notamment au niveau d'une zone située à l'avant de l'arbre de transmission de puissance (52), dans une direction principale de déplacement du véhicule.

3. Véhicule du type à enfourcher selon la revendication 1 ou 2, **caractérisé en ce qu'**il est prévu un espace formant coffre (5) dans un espace situé au-dessus de la partie cylindre (31) du moteur (30), de la génératrice (60), et/ou de l'arbre de transmission de puissance (50).

4. Véhicule du type à enfourcher selon au moins l'une des revendications 1 à 3, **caractérisé en ce que** la partie cylindre (31) du moteur (30) est disposée au niveau d'une zone située à l'avant de l'arbre de transmission de puissance (52) dans la direction principale de déplacement du véhicule, tandis que la génératrice (60) est prévue au-dessus des moyens de distribution de puissance (50) et au-dessous d'une partie de selle (4) du véhicule.

5. Véhicule du type à enfourcher selon au moins l'une des revendications 1 à 4, **caractérisé en ce que** la génératrice (60) est disposée en une position dans laquelle de la puissance est transmise à partir des moyens de distribution de puissance (50) par l'intermédiaire de moyens de transmission de puissance, en particulier des moyens de transmission sans fin, tels qu'une courroie ou une chaîne (40) disposée dans un côté latéral extérieur du véhicule.

6. Véhicule du type à enfourcher selon au moins l'une des revendications 1 à 5, **caractérisé en ce que** le moteur électrique (80) et les moyens d'entraînement (8), qui sont notamment une roue d'entraînement, sont disposés de manière coaxiale, dans lequel en particulier les écartements, par rapport à la surface, d'un arbre d'entraînement (10) des moyens d'entraînement (8), de l'arbre de transmission de puissance (52) et/ou d'un arbre (61) de la génératrice (60) sont approximativement les mêmes.

7. Véhicule du type à enfourcher selon au moins l'une des revendications 1 à 6, **caractérisé en ce que** le moteur (30) est placé de telle sorte que son axe de cylindre soit disposé approximativement horizontalement.

8. Véhicule du type à enfourcher selon au moins l'une des revendications 1 à 7, **caractérisé en ce qu'**il comprend en outre :
un réducteur de vitesse (90) servant à régler des forces d'entraînement provenant du moteur (30) et du moteur électrique (80) afin de transmettre les forces d'entraînement à un arbre (10) des moyens d'entraînement (8),
dans lequel le réducteur de vitesse (90) est, de préférence, prévu en aval des moyens de distribution de puissance (50) dans un trajet de transmission de la force d'entraînement du moteur (30) à l'arbre (10) des moyens d'entraînement (8).

9. Véhicule du type à enfourcher selon au moins l'une des revendications 1 à 8, **caractérisé en ce que** les moyens de distribution de puissance (50) comprennent une transmission du type à pignons planétaires.

10. Véhicule du type à enfourcher selon au moins l'une des revendications 1 à 9, **caractérisé en ce qu'**un mécanisme d'embrayage (40) est prévu dans un trajet de transmission de la force d'entraînement du moteur (30) à l'arbre (10) des moyens d'entraînement (8), en particulier entre un vilebrequin (35) du moteur et l'arbre de transmission de puissance (52) des moyens de distribution de puissance (50).
